# EUROPEAN PATENT APPLICATION

(11) **EP 4 618 278 A1**
(43) Date of publication of application: **17.09.2025**
(21) Application number: 22968806.4
(22) Date of filing: 19.12.2022
(51) Int. Cl.: H01M 50/242

(54) **BATTERY CELL, BATTERY AND ELECTRIC DEVICE**

(71) Applicant: Contemporary Amperex Technology (Hong Kong) Limited, Hong Kong (HK)
(72) Inventor: JIN, Haizu, Ningde, Fujian 352100 (CN); SUN, Jingxuan, Ningde, Fujian 352100 (CN); YE, Yonghuang, Ningde, Fujian 352100 (CN)
(74) Representative: Gong, Jinping
(86) International application number: PCT/CN2022/140104
(87) International publication number: WO 2024/130502

(57) **Abstract**

This application discloses a battery cell (100), a battery, and an electric apparatus. The battery cell (100) includes a housing (10) and an electrode assembly (20), the electrode assembly (20) being disposed in the housing (10), where a buffer member (30) is further disposed in the housing (10), and the buffer member (30) is configured to be deformable when the electrode assembly (20) deforms.

## Description

### TECHNICAL FIELD

This application relates to the field of batteries, and specifically, to a battery cell, a battery, and an electric apparatus.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technology is an important factor in connection with their development.

During charging and discharging of a battery in use, a battery cell has a significant change in volume, which results in a problem of large swelling and in turn affects the service life of the battery.

### SUMMARY

In view of the foregoing problem, this application provides a battery cell, a battery, and an electric apparatus, which can alleviate the problem of large swelling of the battery in use and prolong the service life of the battery cell.

According to a first aspect, this application provides a battery cell including a housing and an electrode assembly, the electrode assembly being disposed in the housing, where a buffer member is further disposed in the housing, and the buffer member is configured to be deformable when the electrode assembly deforms.

In a technical solution of embodiments of this application, the buffer member is disposed in the housing, so the buffer member can deform with deformation of the electrode assembly during charging and discharging of the battery cell, changing a space for accommodating the electrode assembly in the battery cell, so that when the electrode assembly swells, stress applied to the electrode assembly due to the swelling is reduced and deformation amount of the housing of the battery cell can be reduced as well, thereby alleviating the problem of large swelling of the battery cell during charging and discharging and prolonging the service life of the battery cell.

In some embodiments, the buffer member at least corresponds to a largest surface of the electrode assembly. In this technical solution, the buffer member faces the large surface of the electrode assembly, thereby absorbing swelling of the large surface as much as possible.

In some embodiments, the buffer member is formed in a sheet shape. In this technical solution, the buffer member being configured as a sheet-like structure facilitates installation of the buffer member in the battery cell and also reduces space occupied by the buffer member as much as possible.

In some embodiments, the buffer member includes a weight reducing structure. In this technical solution, the provision of the weight reducing structure can reduce weight of the buffer member, thereby reducing weight of the battery cell.

In some embodiments, the weight reducing structure is at least one of a groove, a hole, and a rough surface. In this technical solution, without affecting elasticity, the structures such as the groove are provided to reduce the weight of the buffer member.

In some embodiments, the weight reducing structure is provided with a filler inside, and the filler is at least one of a reactive ion supplement, a flame retardant/safener, and a dissolved metal element complexing agent. The provision of the filler can prolong the service life of the battery cell, or catalytic activity is reduced by complexation to ensure chemical stability of the battery cell.

In some embodiments, an outer surface of the buffer member is coated with a flame retardant; and/or the outer surface of the buffer member has a shaping material. In this technical solution, the provision of the flame retardant can improve the safety performance and prevent thermal runway, thermal spreading, and the like; and the provision of the shaping material can prevent thermal shrinkage or wrinkling of the buffer member after hot pressing.

In some embodiments, the buffer member includes one or more of polymers such as rubber, foam, aerogel, and silicone. This technical solution can reduce manufacturing costs while improving the elasticity of the buffer member.

In some embodiments, the buffer member is disposed between the housing and the electrode assembly. In this technical solution, disposing the buffer member between the housing and the electrode assembly facilitates installation and can effectively reduce the possibility of deformation of the housing.

In some embodiments, the housing includes a shell and an end cover, the shell is provided with an accommodating cavity with one side open, the end cover fits with the shell to close the accommodating cavity, and the buffer member is disposed between the shell and the electrode assembly. In this technical solution, disposing the buffer member between the housing and the electrode assembly can reduce the space occupied by the buffer member, increase the energy density, and also facilitate installation.

In some embodiments, the buffer member corresponds to two largest side surfaces of the shell and a bottom wall of the shell. In this technical solution, the buffer member faces the two large surfaces, effectively absorbing swelling stress; in addition, the buffer member is formed as an integrated member, facilitating assembly of the buffer member in the housing.

In some embodiments, an inner wall of the housing is provided with the buffer member, and a ratio of a compressible amount of the buffer member to a total wall thickness of the housing is in a range of 10% to 90%. In this technical solution, the buffer member is fixed reliably and also can effectively absorb swelling amount of the electrode assembly, thereby reducing the possibility of deformation of the housing.

In some embodiments, a heat conduction coefficient of the buffer member is greater than 0.3 W/(m•°C). In this technical solution, heat of the electrode assembly can be quickly transferred to the housing through the buffer member and then discharged through the housing, thereby improving the safety performance of the battery cell.

In some embodiments, the buffer member is coated with a heat conduction coating, or the buffer member is a member made of a heat conduction material. This technical solution can achieve effective heat conduction, thereby improving the safety performance.

In some embodiments, the buffer member is adhered to the housing and/or the electrode assembly. This technical solution can improve fixation reliability of the buffer member.

In some embodiments, the electrode assembly is provided in plurality, and the buffer member is disposed between at least adjacent two of the electrode assemblies. In this technical solution, the buffer member can effectively absorb swelling amount of the electrode assembly, thereby reducing stress applied to the electrode assembly due to the swelling.

In some embodiments, the electrode assembly includes a plurality of electrode plates, and the buffer member is disposed between at least adjacent two of the electrode plates. In this technical solution, the buffer member can effectively absorb swelling of the electrode plates, thereby reducing stress during the swelling of the electrode assembly.

In some embodiments, the electrode assembly further includes a separating member, the electrode plate includes a positive electrode plate and a negative electrode plate, and the buffer member is disposed between the separating member and the negative electrode plate. In this technical solution, due to a large deformation amount of the negative electrode plate, disposing the buffer member between the separating member and the negative electrode plate can effectively absorb swelling of the negative electrode plate, thereby reducing stress applied to the electrode assembly due to the swelling.

In some embodiments, the heat conduction coefficient of the buffer member is not greater than 0.2 W/(m•°C). This technical solution can achieve effective heat insulation and increase an overall failure temperature, thereby improving the safety performance.

In some embodiments, the compressible amount of the buffer member is greater than or equal to a swelling amount of the electrode assembly. This technical solution can make the buffer member absorb the swelling of the electrode assembly as much as possible and reduce stress applied to the electrode assembly due to the swelling, thereby reducing an overall deformation amount of the battery cell and prolonging the service life of the battery cell.

In some embodiments, the compressible amount of the buffer member is in a range of 1 mm to 100 mm. This technical solution can prevent the buffer member from occupying an excessively large space and affecting the energy density of the battery cell while reducing the stress applied to the electrode assembly due to the swelling.

In some examples, a compressible proportion of the buffer member is 10% to 95%. In this technical solution, the buffer member can experience a compressive deformation with the swelling of the electrode assembly, so as to absorb the swelling of the electrode assembly as much as possible.

In some embodiments, the swelling amount of the electrode assembly is in a range of 0.2 mm to 80 mm. In this technical solution, the buffer member can absorb the swelling of the electrode assembly as much as possible, thereby reducing stress applied to the electrode assembly due to the swelling; and the buffer member can absorb the swelling of the electrode assembly as much as possible, thereby reducing stress applied to the electrode assembly due to the swelling.

In some examples, a swelling rate of the electrode assembly is in a range of 5% to 200%. In this technical solution, the deformation of the electrode assembly with a large swelling rate can be absorbed by the buffer member, thereby reducing stress applied to the electrode assembly due to the swelling and prolonging the service life of the battery cell.

In some embodiments, a ratio of a total volume of the buffer member and a total internal volume of the housing is 0.05 to 0.6. This technical solution can prevent the buffer member from occupying an excessively large space so as not to affect the space for the electrode assembly or affect the energy density and also prevent the buffer member from occupying an excessively small space so as not to cause a failure in effectively absorbing the swelling amount of the electrode assembly.

In some embodiments, an area ratio of the buffer member and the largest surface of the electrode assembly is 0.1 to 1. This technical solution can reduce a size of an elastic sheet while effectively absorbing the swelling, thereby reducing costs, reducing weight of the whole structure, and also reducing precision requirements in installation of the elastic sheet.

In some embodiments, a ratio of the compressible amount of the buffer member to a thickness of the electrode assembly in a fully discharged state of the battery cell is 5% to 80%. In this technical solution, the buffer member can absorb the swelling of the electrode assembly as much as possible, thereby reducing stress applied to the electrode assembly due to the swelling.

In some embodiments, the battery cell is a metal battery. This technical solution can alleviate the problem of large swelling of the metal battery, thereby prolonging the service life of the metal battery.

In some embodiments, the negative electrode plate of the electrode assembly includes a substrate and a conductive coating applied onto a surface of the substrate. In this technical solution, the negative electrode plate is formed by the substrate and the conductive coating on the substrate and is provided with no negative electrode active substance layer, so during charging and discharging of the battery cell, the negative electrode plate has a large swelling amount; therefore, the provision of the buffer member can effectively alleviate the problem of large swelling of the negative electrode plate during charging and discharging of the battery, thereby prolonging the service life of the battery cell.

In some embodiments, the battery cell is a sodium metal battery. In this technical solution, the sodium metal battery has a large swelling rate, and the problem of large swelling of the sodium metal battery can be alleviated, thereby prolonging the service life of the metal battery.

According to a second aspect, this application provides a battery including the battery cell in the foregoing embodiments.

According to a third aspect, this application provides an electric apparatus including the battery cell in the foregoing embodiments, where the battery cell is configured to provide electrical energy.

The foregoing description is merely an overview of the technical solutions of this application. For a better understanding of the technical means in this application such that they can be implemented according to the content of the specification and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments, but are not construed as a limitation on this application. Moreover, throughout the accompanying drawings, the same reference signs represent the same parts. In the accompanying drawings:
FIG. 1 is a schematic diagram of a vehicle in a related art;
FIG. 2 is a schematic diagram of a battery in a related art;
FIG. 3 is a schematic diagram of a battery cell according to some embodiments of this application;
FIG. 4 is an exploded view of a battery cell according to some embodiments of this application;
FIG. 5 is a perspective exploded view of a battery cell according to some embodiments of this application;
FIG. 6 is a cross-sectional view of a local structure according to some embodiments of this application, where the electrode assembly is in a fully discharged state;
FIG. 7 is a cross-sectional view of a local structure according to some embodiments of this application, where the electrode assembly is in a fully charged state;
FIG. 8 is a cross-sectional view of a partial structure of a battery cell according to some other embodiments of this application;
FIG. 9 is a cross-sectional view of a local structure of a battery cell according to still some embodiments of this application, where the electrode assembly is in a fully discharged state;
FIG. 10 is a cross-sectional view of a local structure according to yet some embodiments of this application, where the electrode assembly is in a fully charged state;
FIG. 11 is a cross-sectional view of a local structure according to still yet some embodiments of this application, where the electrode assembly is in a fully discharged state;
FIG. 12 is a cross-sectional view of a local structure according to further some embodiments of this application, where the electrode assembly is in a fully charged state;
FIG. 13 is a cross-sectional view of a local structure of a battery cell according to still further some embodiments of this application, where the electrode assembly is in a fully discharged state; and
FIG. 14 is a cross-sectional view of a local structure according to yet further some embodiments of this application, where the electrode assembly is in a fully charged state.

Reference signs:
1000. vehicle; 200. controller; 300. motor; 2000. battery; 400. box; 410. first portion; 420. second portion;
100. battery cell; 10. housing; 11. shell; 12. end cover; 13. inner shell; 20. electrode assembly; 21. positive electrode plate; 22. negative electrode plate; 23. separating member; and 30. buffer member.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application belongs. The terms used in the specification of the utility model in this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to indicate a specified sequence or a primary-secondary relationship.

Reference to "embodiment" in this application means that specific features, structures, or characteristics described with reference to the embodiments may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection; and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate: presence of only A; presence of both A and B; and presence of only B. In addition, the character "/" in this application generally indicates an "or" relationship between the contextually associated objects.

In the embodiments of this application, the same reference signs represent the same parts. For brevity, in different embodiments, detailed descriptions of the same parts are not repeated. It should be understood that as shown in the accompanying drawings, sizes such as thickness, length, and width of various components and sizes such as overall thickness, length, and width of integrated devices in the embodiments of this application are merely for illustrative purposes and should not constitute any limitation on this application.

In this application, "a plurality of" means more than two (inclusive).

The battery mentioned in the embodiments of this application may be a single physical module that includes one or more battery units for providing a higher voltage and capacity. When a plurality of battery cells are provided, the plurality of battery cells are connected in series, parallel, or series-parallel via an electrical connecting member.

In some embodiments, the battery may be a battery module. When a plurality of battery cells are provided, the plurality of battery cells are arranged and fixed to form one battery module.

In some embodiments, the battery may be a battery pack. The battery pack includes a box and a battery cell, with the battery cell or battery module accommodated in the box.

In some embodiments, the box may be a part of a chassis structure of a vehicle. For example, a part of the box may be at least a part of a chassis of a vehicle. Alternatively, a part of the box may be at least a part of a cross beam and a girder of a vehicle.

In some embodiments, the battery may be an energy storage apparatus. Energy storage apparatuses include energy storage containers, energy storage cabinets, and the like.

In the embodiments of this application, the battery cell may be a secondary battery. A secondary battery is a battery cell whose active material can be activated for reuse through charging after the battery cell is discharged.

The battery cell may be a lithium-ion battery cell, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead storage battery, or the like. This is not limited in the embodiments of this application.

A battery cell typically includes an electrode assembly. The electrode assembly includes a positive electrode, a negative electrode, and a separating member. During charging and discharging of the battery cell, active ions (for example, lithium ions) intercalate and deintercalate back and forth between the positive electrode and the negative electrode. The separating member is disposed between the positive electrode and the negative electrode to prevent short circuits between the positive and negative electrodes and allow active ions to pass through.

In some embodiments, the positive electrode may be a positive electrode plate. The positive electrode plate includes a positive electrode current collector and a positive electrode active material disposed on at least one surface of the positive electrode current collector.

In an example, the positive electrode current collector includes two opposite surfaces in its thickness direction, and the positive electrode active material is provided on any one or both of the two opposite surfaces of the positive electrode current collector.

In an example, the positive electrode current collector may be a metal foil or a composite current collector. For example, as the metal foil, the positive electrode current collector may use aluminum or stainless steel subjected to surface treatment with silver, stainless steel, copper, aluminum, nickel, baked carbon, carbon, nickel, titanium, or the like. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix such as polypropylene, polyethylene terephthalate, polybutylene terephthalate, polystyrene, and polyethylene).

In an example, the positive electrode active material may include at least one of the following materials: lithium-containing phosphate, lithium transition metal oxide, and respective modified compounds thereof. However, this application is not limited to these materials, and may alternatively use other conventional materials that can be used as positive electrode active materials for batteries.

In some embodiments, the negative electrode may be a negative electrode plate, and the negative electrode plate may include a negative electrode current collector.

In an example, the negative electrode current collector may be a metal foil or a composite current collector. For example, as the metal foil, the negative electrode current collector may use aluminum or stainless steel subjected to surface treatment with silver, stainless steel, copper, aluminum, nickel, baked carbon, carbon, nickel, titanium, or the like.

In some embodiments, the negative electrode current collector includes two opposite surfaces in its thickness direction, and a negative electrode active material is provided on any one or both of the two opposite surfaces of the negative electrode current collector.

In an example, the negative electrode active material may be a negative electrode active material for batteries well known in the art. In an example, the negative electrode active material may include at least one of the following materials: artificial graphite, natural graphite, soft carbon, hard carbon, silicon-based material, tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries. One type of these negative electrode active materials may be used alone, or two or more of them may be used in combination.

In some embodiments, the separating member is a separator. The separator is not limited to any particular type in this application, and may be any well-known porous separator with good chemical stability and mechanical stability.

In an example, major materials of the separator may be at least one selected from glass fiber, non-woven fabric, polyethylene, polypropylene, polyvinylidene fluoride, and ceramics. The separator may be a single-layer film or a multi-layer composite film. This is not particularly limited. When the separator is a multi-layer composite film, all layers may be made of same or different materials. This is not particularly limited. The separating member may be an independent component located between the positive and negative electrodes, or may be attached to surfaces of the positive and negative electrodes.

In some embodiments, the separating member is a solid electrolyte. The solid electrolyte is disposed between the positive electrode and the negative electrode, and plays the roles of transporting ions and isolating the positive and negative electrodes.

In some embodiments, the electrode assembly is a wound structure. The positive electrode plate and the negative electrode plate are wound to form the wound structure.

In some embodiments, the electrode assembly is a laminated structure.

In some embodiments, the battery cell may include a housing. The housing is configured to package components like the electrode assembly and the electrolyte. The housing may be a steel housing, aluminum housing, plastic (such as polypropylene) housing, or composite metal housing (such as copper-aluminum composite housing), an aluminum-plastic film, or the like.

In some embodiments, the housing includes an end cover and a shell. The housing is provided with an opening, and the end cover closes the opening to form a closed space for accommodating substances such as the electrode assembly and the electrolyte. The shell may be provided with one or more openings. One or more end covers may also be provided.

In some embodiments, the housing is provided with at least one electrode terminal, and the electrode terminal is electrically connected to a tab of the electrode assembly. The electrode terminal may be directly connected to the tab or indirectly connected to the tab through an adapting component. The electrode terminal may be disposed on the end cover or on the shell.

In some embodiments, the housing is provided with an explosion-proof valve. The explosion-proof valve is configured to release internal pressure of the battery cell.

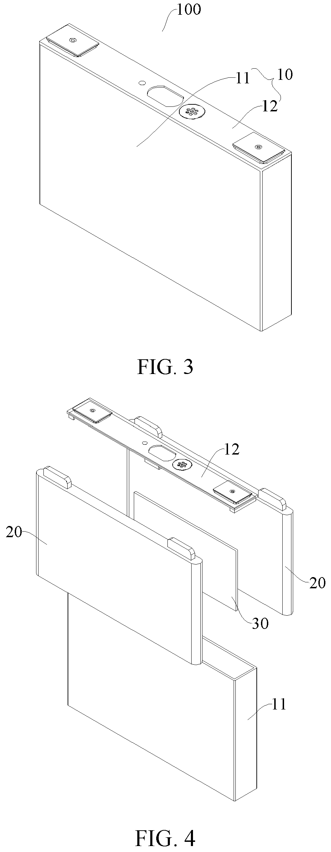

In an example, the battery cell may be a cylindrical battery cell, prismatic battery cell, pouch battery cell, or battery cell of another shape. Prismatic battery cells include square battery cells, blade battery cells, and multi-prism batteries, where multi-prism batteries are, for example, six-prism batteries. This is not particularly limited in the embodiments of this application. Referring to FIG. 3, the embodiments of this application use the square battery cell as an example.

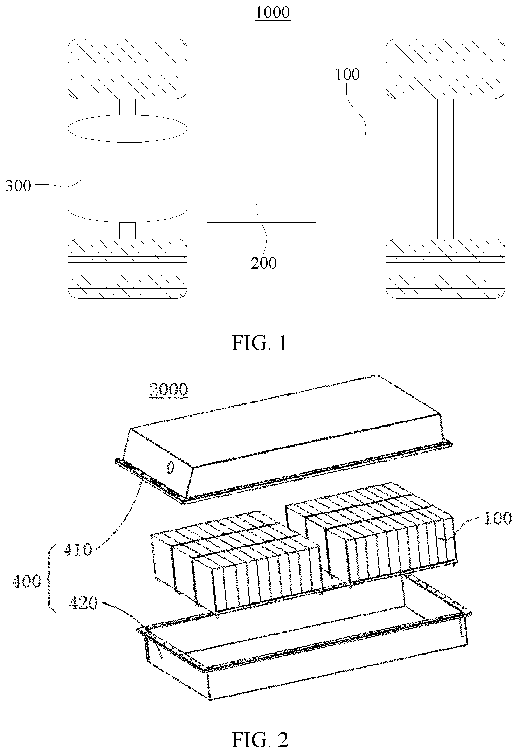

As shown in FIG. 2, the battery includes a box and a battery cell, and the box includes an upper shell and a lower shell. When the battery cell is installed in the box, during charging and discharging of the battery, the battery cell has a significant change in volume, and large swelling of the battery cell also causes the battery box to easily deform due to extrusion, affecting the service life of the battery. In a conventional technology, in a box of a battery, a buffer pad is disposed between two adjacent battery cells to reduce extrusion of the battery cells to the box. However, during charging and discharging of the battery, large swelling of the battery cells causes a structural damage, resulting in a short battery service life due to failure of the battery cells.

The inventors have found that the structure of the battery cells can be improved to reduce the probability of short battery service life caused by large swelling of the battery cells. Specifically, this application provides a battery cell including a housing and an electrode assembly, and the electrode assembly is disposed in the housing, where a buffer member is further disposed in the housing, and the buffer member is deformable when the electrode assembly deforms.

In a battery cell with such structure, the buffer member is disposed in the housing, so the buffer member can deform with deformation of the electrode assembly during charging and discharging of the battery cell, changing a space for accommodating the electrode assembly in the battery cell, so that when the electrode assembly swells, stress applied to the electrode assembly due to the swelling is reduced and deformation amount of the housing of the battery cell can be reduced as well, thereby alleviating the problem of large swelling of the battery cell during charging and discharging and prolonging the service life of the battery cell.

The battery cell disclosed in the embodiments of this application may be used without limitation in an electric apparatus such as a vehicle, a ship, or an aircraft. The battery disclosed in this application can form a power supply system of the electric apparatus so as to ensure the use safety and reliability of the electric apparatus.

An embodiment of this application provides an electric apparatus that uses a battery as a power source. The electric apparatus may be but is not limited to a mobile phone, a tablet computer, a laptop computer, an electric toy, an electric tool, an electric bicycle, an electric motorcycle, an electric car, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus in an embodiment of this application being a vehicle is used as an example for description of the following embodiments.

Refer to FIG. 1. FIG. 1 is a schematic structural diagram of a vehicle according to some embodiments of this application. A vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery cell 100 inside, where the battery cell 100 may be disposed at the bottom, front, or rear of the vehicle 1000. The battery cell 100 may be configured to supply power to the vehicle 1000. For example, the battery cell 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Optionally, as shown in FIG. 1, when the battery cell is used in a vehicle, a battery may be formed by a plurality of battery cells, and the battery cells and the battery may be disposed at the bottom, front, or rear of the vehicle. The battery cell may be configured to supply power to the vehicle. For example, the battery cell may be used as an operational power supply for the vehicle. The vehicle may further include a controller and a motor, where the controller is configured to control the battery cell to supply power to the motor, for example, to satisfy power needs of start, navigation, and driving of the vehicle.

Refer to FIG. 2. FIG. 2 is an exploded view of a battery 2000 according to some embodiments of this application. The battery 2000 includes a box 400 and a battery cell 100, where the battery cell 100 is accommodated in the box 400. The box 400 is configured to provide an accommodating space for the battery cell 100. The box 400 may be a variety of structures. In some embodiments, the box 400 may include a first portion 410 and a second portion 420. The first portion 410 and the second portion 420 fit together such that the first portion 410 and the second portion 420 jointly define an accommodating space for accommodating the battery cell 100. The second portion 420 may be a hollow structure with one end open, and the first portion 410 may be a plate structure, where the first portion 410 covers the open side of the second portion 420 so that the first portion 410 and the second portion 420 jointly define the accommodating space. Alternatively, the first portion 410 and the second portion 420 may both be hollow structures with one side open, where the open side of the first portion 410 is engaged with the open side of the second portion 420. Certainly, the box 400 formed by the first portion 410 and the second portion 420 may be of a variety of shapes, for example, cylinder or cuboid.

In the battery 2000, a plurality of battery cells 100 may be provided, and the plurality of battery cells 100 may be connected in series, parallel, or series-parallel, where being connected in series-parallel means a combination of series connection and parallel connection of the plurality of battery cells 100. The plurality of battery cells 100 may be directly connected in series, parallel, or series-parallel, and then an entirety of the plurality of battery cells 100 is accommodated in the box 400. Certainly, the battery 2000 may alternatively be formed in a manner that a plurality of battery cells 100 are connected in series, parallel, or series-parallel first to form a battery module and then a plurality of battery modules are connected in series, parallel, or series-parallel to form an entirety which is accommodated in the box 400. The battery 2000 may further include other structures. For example, the battery 2000 may further include a busbar configured to implement electrical connection between the plurality of battery cells 100.

The following describes a battery cell 100 according to an embodiment of this application with reference to the accompanying drawings.

As shown in FIG. 3 and FIG. 4, the battery cell 100 according to an embodiment of this application includes: a housing 10 and an electrode assembly 20; the electrode assembly 20 is disposed in the housing 10; a buffer member 30 is further disposed in the housing 10; and the buffer member 30 is deformable when the electrode assembly 20 deforms.

The housing 10 refers to an outermost structural member of the battery cell 100 for accommodating the electrode assembly 20, the electrolyte, and the like in the housing 10, where the housing 10 herein may be an aluminum housing.

The electrode assembly 20 is disposed in the housing 10. The electrode assembly 20 may be in a stacked form, that is, a plurality of electrode plates of the electrode assembly 20 are stacked. The electrode assembly 20 may alternatively be in a wound form, that is, the positive electrode plate and the negative electrode plate of the electrode assembly 20 are wound after stacked. In addition, the housing 10 may be provided with one electrode assembly 20 or a plurality of electrode assemblies 20 inside.

The buffer member 30 is disposed in the housing 10, that is, the buffer member 30 is located in one battery cell 100. The buffer member 30 may be located between the housing 10 and the electrode assembly 20, between adjacent electrode assemblies 20, or in the electrode assembly 20, that is, the buffer member 30 is located between the positive and negative electrode plates.

When the electrode assembly 20 deforms due to swelling during charging and discharging of the battery cell 100, the electrode assembly 20 compresses the buffer member 30 during swelling, causing compressive deformation of the buffer member 30 and reducing space occupied by the buffer member 30, thereby increasing the space for accommodating the electrode assembly 20 in the housing 10, so that a swelling portion of the electrode assembly 20 can occupy this space, reducing stress applied to the electrode assembly 20 due to the swelling and also reducing deformation amount of the housing 10 as much as possible, thereby preventing the problems such as damage and short service life of the electric apparatus or battery caused by excessive deformation of the housing 10.

In a battery cell 100 with such structure, the buffer member 30 is disposed in the housing 10, so the buffer member 30 can deform with deformation of the electrode assembly 20 during charging and discharging of the battery cell 100, changing the space for accommodating the electrode assembly 20 in the battery cell, so that when the electrode assembly 20 swells, stress applied to the electrode assembly 20 due to the swelling is reduced and deformation amount of the housing 10 of the battery cell 100 can be reduced as well, thereby alleviating the problem of large swelling of the battery cell 100 during charging and discharging and prolonging the service life of the battery cell 100.

In some embodiments, the buffer member 30 at least corresponds to a largest surface of the electrode assembly 20.

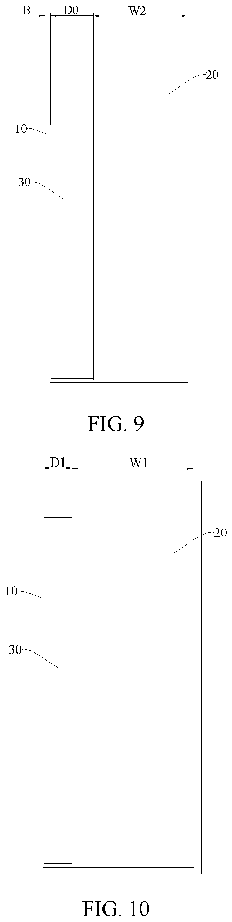

As shown in FIG. 4 and FIG. 9, some electrode assemblies 20 each include two end surfaces and four side surfaces, where two oppositely-arranged side surfaces have relatively large areas, which are large surfaces of the electrode assembly 20; and the other two oppositely-arranged side surfaces have relatively small areas, which are small surfaces of the electrode assembly 20. The buffer member 30 corresponds to the large surfaces, or the large surfaces and the small surfaces each have a corresponding buffer member 30, or one end surface and one large surface each have a corresponding buffer member 30, or the two end surfaces and two large surface each have a corresponding buffer member 30. When the electrode assembly 20 swells, the large surfaces have a larger swelling amount. Therefore, the buffer member 30 faces the large surfaces of the electrode assembly 20 to absorb the swelling of the large surfaces as much as possible, thereby reducing the stress applied to the electrode assembly 20 due to swelling.

In some embodiments, the buffer member 30 is formed in a sheet shape.

In some embodiments, the buffer member 30 may be formed in a square sheet shape, a circular sheet shape, or a triangular sheet shape. In this technical solution, the buffer member 30 being configured as a sheet-like structure facilitates installation of the buffer member 30 in the battery cell 100 and also reduces space occupied by the buffer member 30 as much as possible.

In some embodiments, a side of the buffer member 30 in contact with the electrode assembly 20 is a smooth plane. This can avoid the problems such as uneven force distribution and excessive local stress caused by point contact.

It can be understood that the buffer member 30 may be formed in a single-layer or multi-layer sheet-like structure, where the multi-layer sheet-like structure may be formed as an integrated structure, improving the stability of the buffer member 30 and also facilitating assembly of the buffer member 30 in the battery cell 100.

In some embodiments, the buffer member 30 includes a weight reducing structure. In this technical solution, the provision of the weight reducing structure can reduce weight of the buffer member 30, thereby reducing weight of the entire battery.

In some embodiments, the weight reducing structure is at least one of a groove, a hole, and a rough surface.

The weight reducing structure is also a groove or hole provided on the buffer member 30, or a surface of the buffer member 30 is roughed to implement a design of the weight reducing structure. Various weight reducing structures may be provided.

In this technical solution, without affecting elasticity, the structures such as the groove are provided to reduce the weight of the buffer member 30.

In some embodiments, the weight reducing structure is provided with a filler inside, and the filler is at least one of a reactive ion supplement, a flame retardant/safener, and a dissolved metal element complexing agent.

To be specific, the weight reducing structure may further be provided with a reactive ion supplement such as a lithium or sodium supplement, to improve the service life of the battery cell 100 by supplementing reactive ions. The weight reducing structure may also be provided with a dissolved metal complexing agent for complexing with the reactive ions to reduce catalytic activity, thereby preventing precipitation of excessive reactive ions from puncturing the separating member while such puncturing causes short circuits and the like.

The weight reducing structure may further be provided with a flame retardant or safener. The flame retardant may be aluminum hydroxide, magnesium hydroxide, zinc borate, organic silicone flame retardant, phosphate, ammonium polyphosphate, silicate, or the like. Alternatively, coating materials such as boehmite and alumina may be used to improve the chemical stability of the buffer member. A carbonate material may be used as the safener, which decomposes at a high temperature to produce non-combustible carbon dioxide, triggering an explosion-proof valve to open in advance to provide proactive safety measures. To be specific, the provision of a flame retardant can improve the safety performance. In other words, the weight reducing structure can be provided with various functional agents that are beneficial to the performance of the battery cell.

In this technical solution, the provision of the filler can prolong the service life of the battery cell 100, or catalytic activity of a transition metal after dissolution is reduced by complexation to ensure the chemical stability of the battery cell 100.

In some embodiments, an outer surface of the buffer member 30 is coated with a flame retardant; and/or the outer surface of the buffer member 30 has a shaping material.

The flame retardant may be aluminum hydroxide, magnesium hydroxide, zinc borate, organic silicone flame retardant, phosphate, ammonium polyphosphate, silicate, or the like. Alternatively, coating materials such as boehmite and alumina may be used to improve the chemical stability of the buffer member, or a carbonate material may be used, which decomposes at a high temperature to produce non-combustible carbon dioxide, triggering an explosion-proof valve to open in advance to provide proactive safety measures. To be specific, the provision of a flame retardant can improve the safety performance.

The shaping material may be a ceramic material. The provision of the shaping material can prevent thermal shrinkage or wrinkling of the elastic buffer member 30 located between electrode plate layers after the buffer member 30 is hot-pressed with the electrode assembly 20, thereby improving the structural stability.

It can be understood that the structure applied or provided on the outer surface of the buffer member 30 is a part of the buffer member 30. During thickness calculation of the buffer member 30, a thickness of the entire buffer member 30 is calculated without excluding additional structures such as the coating.

In this technical solution, the provision of the flame retardant can improve the safety performance and prevent thermal runway, thermal spreading, and the like; and the provision of the shaping material can prevent thermal shrinkage or wrinkling of the buffer member 30 located between the electrode plate layers after the buffer member 30 is hot-pressed with the electrode assembly 20.

In addition, the outer surface of the buffer member 30 may further be coated with a lithium or sodium supplement to prolong the service life of the battery cell 100 or coated with a dissolved metal complexing agent to reduce the catalytic activity through complexation.

In some embodiments, the buffer member 30 includes one or more of polymers such as rubber, foam, aerogel, and silicone.

In some examples, the buffer member 30 can be made of one of rubber, foam, aerogel, and silicone. The buffer member 30 may alternatively be a composite member formed by compounding rubber, foam, aerogel, and silicone.

In this technical solution, the use of these types of polymers can reduce manufacturing costs while improving the elasticity of the buffer member 30.

In some embodiments, the buffer member 30 is disposed between the housing 10 and the electrode assembly 20.

The buffer member 30 is disposed between the housing 10 and the electrode assembly 20, the buffer member 30 can experience compressive deformation with the swelling of the electrode assembly 20 during charging and discharging of the battery cell 100, increasing the space for accommodating the electrode assembly 20 in the battery cell 100, so that the stress applied to the electrode assembly 20 due to the swelling can be reduced and the possibility of deformation of the housing 10 can be reduced as well, thereby alleviating the problem of large swelling of the battery cell 100 during charging and discharging and prolonging the service life of the battery cell 100.

In this technical solution, disposing the buffer member 30 between the housing 10 and the electrode assembly 20 facilitates installation and can effectively reduce the possibility of deformation of the housing 10.

In some embodiments, the housing 10 includes a shell 11 and an end cover 12, the shell 11 is provided with an accommodating cavity with one side open, the end cover 12 fits with the shell 11 to close the accommodating cavity, and the buffer member 30 is disposed between the shell 11 and the electrode assembly 20.

The shell 11 fits with the end cover 12 to form the entire housing 10. The buffer member 30 is disposed between the shell 11 and the electrode assembly 20, thereby reducing the space occupied by the buffer member 30, increasing the energy density, and facilitating installation.

In some embodiments, the buffer member 30 corresponds to two largest side surfaces of the shell 11 and a bottom wall of the shell 11.

The side surfaces of the shell 11 include two large surfaces and two small surfaces. The large surfaces have a relatively large swelling amount, so disposing the buffer member 30 opposite the two large surfaces can effectively absorb the swelling of the electrode assembly 20 and reduce swelling stress applied to the electrode assembly 20. A part of the buffer member 30 corresponds to a bottom wall of the shell 11, allowing the buffer member 30 to form an integrated U-shaped structural member. This facilitates the assembly of the buffer member 30 and the shell 11, and the buffer member 30 is less likely to move.

In this technical solution, the buffer member 30 is opposite the two large surfaces, effectively absorbing the swelling amount. In addition, the buffer member 30 forms an integrated member, facilitating the assembly of the buffer member 30 in the shell 11.

In some embodiments, an inner wall of the housing 10 is provided with the buffer member 30, and a ratio of a compressible amount of the buffer member 30 to a sum of a wall thickness of the housing 10 and a thickness of the buffer member 30 is in a range of 10% to 90%.

The compressible amount of the buffer member 30 herein is denoted as Q, the wall thickness of the housing 10 is denoted as B, and the thickness of the buffer member 30 is an initial thickness D0 of the buffer member 30. To be specific, Q/(B+D0) is within the range of 10% to 90%. If this ratio is excessively large, the compressible amount of the buffer member 30 is excessively large, so typically a thicker buffer member 30 is required, and the buffer member 30 occupies an excessively large space, affecting the energy density of the battery cell 100. If this ratio is excessively small, the compressible amount of the buffer member 30 is too small to absorb the deformation of the electrode assembly 20. Therefore, Q/(B+D0) is limited within the range of 10% to 90%, that is, Q/(B+D0) may be 10%, 90%, or any value between 10% and 90%, such as 20%, 30%, 40%, 50%, 60%, 70%, or 80%.

In this technical solution, the buffer member 30 can effectively absorb the swelling amount of the electrode assembly 20 to reduce the possibility of deformation of the housing 10, and does not occupy too much space, avoiding reduction of the energy density of the battery cell 100.

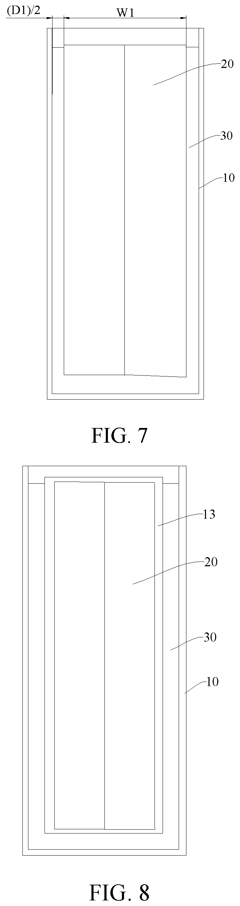

As shown in FIG. 8, in some examples, an inner shell 13 enclosing the electrode assembly 20 is further disposed in the housing 10. One or more electrode assemblies 20 are disposed in the inner shell 13. The buffer member 30 is located between the housing 10 and the inner shell 13. When the electrode assembly 20 deforms, the inner shell 13 can deform accordingly to drive the buffer member 30 to deform. The buffer member 30 can buffer the swelling deformation of the electrode assembly 20, reducing the stress applied to the electrode assembly 20 due to swelling.

In some embodiments, a heat conduction coefficient of the buffer member 30 is not greater than 0.3 W/(m•°C).

With the buffer member 30 having a large heat conduction coefficient, the heat of the electrode assembly 20 can be quickly transferred to the housing 10 through the buffer member 30 and then discharged through the housing 10, thereby improving the safety performance of the battery cell 100.

In some specific embodiments, the buffer member 30 is disposed between the housing 10 and the electrode assembly 20. The porosity of the buffer member 30 is between 20% and 30%. When the heat conduction coefficient α of the buffer member 30 is ≥ 0.3 W/(m•°C), the safety is improved, the failure temperature is increased, and the service life of the battery cell 100 is prolonged. Some specific embodiments are shown in the following table.

| Example | Heat conduction coefficient (W/(m•°C)) | Porosity (%) | Failure temperature of hot box (°C) | Capacity retention rate after 1000 cls at 25°C (%) |
|---|---|---|---|---|
| Example 1 | 0.3 | 20 | 205 | 90.2% |
| Example 2 | 0.4 | 20 | 230 | 90.2% |
| Example 3 | 0.3 | 30 | 205 | 91.4% |
| Comparative example 1 | 0.3 | 2 | 205 | 72.6% |
| Comparative example 2 | 0.05 | 50 | 145 | 82.5% |

A method for testing the capacity retention rate of the battery cell 100 was as follows.

A sodium-ion battery was used as an example. A prepared new sodium-ion battery was fully discharged, charged to 100% SOC, and then fully discharged to a lower voltage limit of 0% SOC; an initial discharge capacity Cap0 of the battery at that point was recorded; subsequently, the battery was subjected to 100 charge-discharge cycles at 1C rate at 25°C and fully discharged to the lower voltage limit of 0% SOC; and a discharge capacity Cap1 of the sodium-ion battery at the 100th cycle was recorded. Thus, a capacity retention rate K of the sodium-ion battery was calculated as K=(Cap1-Cap0)/Cap0×100%.

A method for testing a mass energy density (measured in Wh/Kg): At 25°C, the battery was charged to an upper voltage limit at a rate of 0.33C, then discharged to a lower voltage limit at the rate of 0.33C, where mass energy density (Wh/kg)=discharge capacity *discharge plateau voltage/(total mass of battery cell).

In some embodiments, the buffer member 30 is coated with a heat conduction coating, or the buffer member 30 is a member made of a heat conduction material.

To satisfy the heat conduction coefficient of the buffer member 30, the buffer member 30 may be provided with a heat conduction coating. The heat conduction coating may be silicate, graphene, zirconia, or the like. The buffer member 30 may alternatively be directly made of a heat conduction material. For example, the buffer member 30 is made of silicone with a heat conduction coefficient between 0.8 W/(m·°C) and 2.0 W/(m·°C).

In some embodiments, the buffer member 30 is adhered to the housing 10 and/or the electrode assembly 20.

The buffer member 30 may be adhered to the housing 10, so that the buffer member 30 and the housing 10 form an integrated structure, improving the stability and reliability of the buffer member 30. The buffer member 30 may alternatively be adhered to the electrode assembly 30, so that the buffer member 30 and the electrode assembly 20 form an integrated structure, improving the stability and reliability of the buffer member 30. The buffer member 30 may alternatively be adhered to both the housing 10 and the electrode assembly 20, improving the fixation reliability of the buffer member 30 and the overall structural stability of the battery cell 100.

In this technical solution, the fixation reliability of the buffer member 30 can be improved.

In some embodiments, the electrode assembly 20 is provided in plurality, and the buffer member 30 is disposed between at least adjacent two of the electrode assemblies 20.

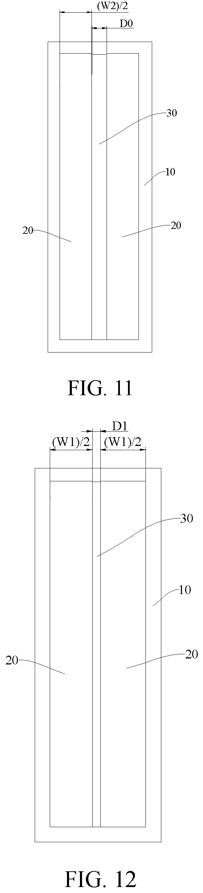

As shown in FIG. 11 and FIG. 12, the buffer member 30 is disposed between adjacent electrode assemblies 20. For example, the buffer member 30 may be disposed between any two adjacent electrode assemblies 20, or the buffer member 30 is disposed between some adjacent electrode assemblies 20. Therefore, the buffer member 30 may be provided in a quantity of one or more, where a total compressible amount of the buffer member 30 is preferably greater than or equal to the swelling amount of the plurality of electrode assemblies 20.

In this technical solution, the buffer member 30 is disposed between the electrode assemblies 20, so that the buffer member 30 can effectively absorb the swelling amount of the electrode assemblies 20, thereby reducing stress applied to the electrode assemblies 20 due to the swelling.

In some embodiments, the electrode assembly 20 includes a plurality of electrode plates, and the buffer member 30 is disposed between at least adjacent two of the electrode plates.

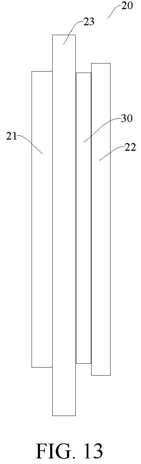

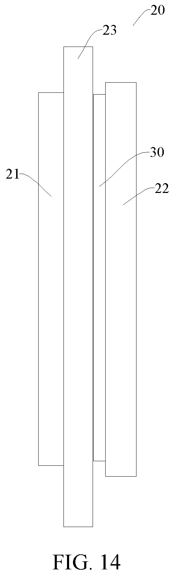

As shown in FIG. 13 and FIG. 14, the buffer member 30 is disposed between adjacent electrode plates 30. For example, the buffer member 30 may be disposed between any two adjacent electrode plates, or between some adjacent electrode plates. Therefore, the buffer member 30 may be provided in a quantity of one or more, where a total compressible amount of the buffer members 30 is preferably greater than or equal to the swelling amount of the electrode assembly 20.

In this technical solution, the buffer member 30 is disposed between the electrode plates, so that the buffer member 30 can effectively absorb the swelling of the electrode plates, thereby reducing stress during the swelling of the electrode assembly 20.

In some embodiments, the electrode assembly 20 may further include a separating member 23. The electrode plates include a positive electrode plate 21 and a negative electrode plate 22. The buffer member 30 is disposed between the separating member 23 and the negative electrode plate 22.

Since the negative electrode plate 22 has a relatively large deformation amount, disposing the buffer member 30 between the separating member 23 and the negative electrode plate 22 can effectively absorb the swelling of the negative electrode plate 22, thereby reducing the stress applied to the electrode assembly 20 due to swelling.

In some embodiments, the heat conduction coefficient of the buffer member 30 is not greater than 0.2 W/(m•°C).

When the heat conduction coefficient α of the buffer member 30 is excessively large, heat can be easily transferred to between adjacent electrode assemblies 20 or adjacent electrode plates through the buffer member 30, affecting the safety performance of the battery cell 100. Therefore, the heat conduction coefficient α can be set to be ≤ 0.2 W/(m•°C) to increase the overall failure temperature, thereby improving the safety performance.

This technical solution can achieve effective heat insulation, thereby improving the safety performance.

In some specific embodiments, the buffer member 30 is disposed between two adjacent electrode assemblies 20 or electrode plates of the electrode assembly 20. The porosity of the buffer member 30 is between 20% and 30%. When the heat conduction coefficient α of the buffer member 30 is ≥ 0.3 W/(m•°C), the safety is improved, the failure temperature is increased, and the service life of the battery cell 100 is prolonged. Some specific embodiments are shown in the following table.

| Example (Between electrode plate layers) | Heat conduction coefficient (W/(m•K)) | Porosity (%) | Failure temperature of hot box (°C) | Capacity retention rate after 1000 cls at 25°C (%) |
|---|---|---|---|---|
| Example 4 | 0.05 | 20 | 210 | 90.2% |
| Example 5 | 0.2 | 20 | 195 | 90.2% |
| Example 6 | 0.05 | 30 | 210 | 91.4% |
| Comparative example 3 | 0.05 | 2 | 210 | 72.6% |
| Comparative example 4 | 1.3 | 50 | 125 | 82.5% |

When disposed between adjacent electrode plates or adjacent electrode assemblies 20, the buffer member 30 needs to have specified thermal insulation capability. Under this condition, a buffer member 30 with a small heat conduction coefficient can be used to bear part of heat of the electrode assembly 20, and the heat conduction coefficient of a heat insulation layer 32 can be set to be below 0.2 W/(m•°C) to achieve heat insulation, avoiding heat accumulation in the electrode assembly 20 caused by an excessively large heat conduction coefficient of the buffer member 30, thereby preventing rapid heat transfer between adjacent electrode plates or adjacent electrode assemblies 20 while such heat transfer affects the safety performance of the battery cell 100. A method for testing the capacity retention rate of the battery cell 100 was the same as previously described, which was not described again herein.

In some embodiments, under a predetermined pressure, the compressible amount of the buffer member 30 is greater than or equal to the swelling amount of the electrode assembly 20.

The compressible amount of the buffer member 30 herein is denoted as Q. The compressible amount Q is a thickness difference between a thickness D1 of the buffer member 30 after compression under the predetermined pressure and an initial thickness D0 of the buffer member 30 at a free state, that is, Q=D0-D1. The predetermined pressure herein may be a maximum surface pressure experienced by the electrode assembly 20.

It should be noted that when one buffer member 30 is provided, the initial thickness D0 of the buffer member 30 at the free state herein is a thickness of the buffer member 30 at the free state, and at this moment, the electrode assembly 20 is in a fully discharged state; and the thickness D1 of the buffer member 30 after compression is a thickness of the buffer member 30 when the electrode assembly 20 is in a fully charged state.

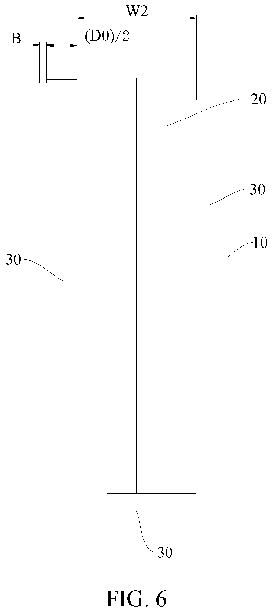

When a plurality of buffer members 30 are provided, the initial thickness D0 of the buffer member 30 at the free state herein is a sum of thicknesses of the buffer members 30 at the free state, and the thickness D1 of the buffer member 30 after compression is a sum of thicknesses of the buffer members 30 after compression. Alternatively, when the buffer member 30 includes a plurality of parts corresponding to the large surfaces of the electrode assembly 20, the initial thickness D0 of the buffer member 30 at the free state herein is a sum of thicknesses of the plurality of parts of the buffer member 30 at the free state, and the thickness D1 of the buffer member 30 after compression is a sum of thicknesses of the plurality of parts of the buffer member 30 after compression. As shown in FIG. 6 and FIG. 7, the buffer member 30 is located between the housing 10 and the electrode assembly 20. The buffer member 30 includes two parts corresponding to the large surfaces of the electrode assembly 20. When the thicknesses of the two parts are the same, each part has a thickness of D0/2 in the free state, and each part has a thickness of D1/2 after compression. When the thicknesses of the two parts are different, the sum of the thicknesses of the two parts in the free state is D0, and the sum of the thicknesses of the two parts after compression is D1.

The swelling amount herein is denoted as W. The swelling amount W is a difference between a total thickness W1 of the electrode assembly 20 which is fully charged to 100% SOC (state of charge) and a thickness W2 of the electrode assembly 20 which is fully discharged to 0% SOC, where W=W1-W2.

It should be noted that when one electrode assembly 20 is disposed in the housing 10, the total thicknesses W1 and W2 of the electrode assembly 20 are the thicknesses W1 and W2 of the electrode assembly 20. When a plurality of electrode assemblies 20 are disposed in the housing 10, the total thicknesses W1 and W2 of the electrode assemblies 20 are the sums W1 and W2 of the thicknesses of the plurality of electrode assemblies 20. As shown in FIG. 10 and FIG. 11, when two electrode assemblies 20 are disposed in the housing 10, each electrode assembly 20 has a thickness of W1/2 when fully charged to 100% SOC (state of charge), and each electrode assembly 20 has a thickness of W2/2 when fully discharged to 0% SOC (state of charge).

The thickness of the buffer member 30 after compression and the thickness of the buffer member 30 in the free state can be measured using devices such as a thickness gauge or a micrometer. Similarly, the total thickness of the electrode assembly 20 which is fully charged to 100% SOC (state of charge) and the thickness of the electrode assembly 20 which is fully discharged to 0% SOC can be measured using devices such as a thickness gauge or a micrometer.

This technical solution can make the buffer member 30 absorb the swelling of the electrode assembly 20 as much as possible and reduce stress applied to the electrode assembly 20 due to the swelling, thereby reducing an overall deformation amount of the battery cell 100 and prolonging the service life of the battery cell 100.

In some embodiments, the compressible amount of the buffer member 30 is in a range of 1 mm to 100 mm.

The applicant has found that the maximum surface pressure experienced by the electrode assembly 20 is not greater than 0.8 Mpa. Thus, under a pressure of 0.8 Mpa, the compressible amount Q of the buffer member 30 in a thickness direction of the electrode plate is in a range of 1 mm to 100 mm. To be specific, Q may be 1 mm, 100 mm, or any value between 1 mm and 100 mm, such as 2 mm, 4 mm, 6 mm, 7 mm, 10 mm, 12 mm, 14 mm, 16 mm, 18 mm, 20 mm, 22 mm, 24 mm, 26 mm, 28 mm, 30 mm, 32 mm, 34 mm, 36 mm, 38 mm, 40 mm, 42 mm, 44 mm, 46 mm, 48 mm, 50 mm, 52 mm, 54 mm, 56 mm, 58 mm, 60 mm, 62 mm, 64 mm, 66 mm, 68 mm, 70 mm, 72 mm, 74 mm, 76 mm, 78 mm, 80 mm, 82 mm, 84 mm, 86 mm, 88 mm, 90 mm, 92 mm, 94 mm, 96 mm, or 98 mm, where if the compressible amount Q is excessively small, the buffer member 30 cannot effectively absorb the swelling amount of the electrode assembly 20; and if the compressible amount Q is excessively large, the buffer member 30 occupies an excessively large space, easily affecting the energy density of the battery cell 100. It should be noted that when a plurality of buffer members 30 are provided, the compressible amount of the buffer member 30 herein is a total compressible amount of the plurality of buffer members 30.

In some preferred examples, the compressible amount Q of the buffer member 30 is in a range of 2 mm to 80 mm. To be specific, Q may be 2 mm, 80 mm, or any value between 2 mm and 80 mm, such as 4 mm, 6 mm, 7 mm, 10 mm, 12 mm, 14 mm, 16 mm, 18 mm, 20 mm, 22 mm, 24 mm, 26 mm, 28 mm, 30 mm, 32 mm, 34 mm, 36 mm, 38 mm, 40 mm, 42 mm, 44 mm, 46 mm, 48 mm, 50 mm, 52 mm, 54 mm, 56 mm, 58 mm, 60 mm, 62 mm, 64 mm, 66 mm, 68 mm, 70 mm, 72 mm, 74 mm, 76 mm, or 78 mm, so that the buffer member 30 can effectively absorb the swelling amount of the electrode assembly 20 without occupying an excessively large space, thereby ensuring a high energy density of the battery cell 100.

This technical solution can prevent the buffer member 30 from occupying an excessively large space and affecting the energy density of the battery cell 100 while reducing the stress applied to the electrode assembly 20 due to the swelling.

In some embodiments, the swelling amount of the electrode assembly 20 is in a range of 0.2 mm to 80 mm.

That is, there are an electrode assembly 20 with a small swelling amount of 0.2 mm, an electrode assembly 20 with a large swelling amount of 80 mm, and an electrode assembly 20 with a swelling amount being any value between 0.2 mm and 80 mm, such as 0.3 mm, 0.4 mm, 0.6 mm, 0.8 mm, 1 mm, 3 mm, 5 mm, 7 mm, 9 mm, 11 mm, 13 mm, 15 mm, 17 mm, 19 mm, 21 mm, 23 mm, 25 mm, 27 mm, 29 mm, 31 mm, 33 mm, 35 mm, 37 mm, 39 mm, 1 mm, 43 mm, 45 mm, 47 mm, 49 mm, 51 mm, 53 mm, 55 mm, 57 mm, 59 mm, 61 mm, 63 mm, 65 mm, 67 mm, 69 mm, 71 mm, 73 mm, 75 mm, 77 mm, or 79 mm. With the buffer member 30 provided, the buffer member 30 can compress to absorb the swelling amount of the electrode assembly 20, thereby reducing the stress applied to the electrode assembly 20. It should be noted that when a plurality of electrode assemblies 20 are provided, the swelling amount of the electrode assembly 20 herein is a total swelling amount of the plurality of electrode assemblies 20.

In some preferred examples, the swelling amount of the electrode assembly 20 is between 0.5 mm and 70 mm. To be specific, the swelling amount of the electrode assembly 20 may be 0.5 mm, 0.8 mm, 1 mm, 3 mm, 5 mm, 7 mm, 9 mm, 11 mm, 13 mm, 15 mm, 17 mm, 19 mm, 21 mm, 23 mm, 25 mm, 27 mm, 29 mm, 31 mm, 33 mm, 35 mm, 37 mm, 39 mm, 1 mm, 43 mm, 45 mm, 47 mm, 49 mm, 51 mm, 53 mm, 55 mm, 57 mm, 59 mm, 61 mm, 63 mm, 65 mm, 67 mm, 69 mm, or 70 mm.

In this technical solution, the buffer member 30 can absorb the swelling of the electrode assembly 20 as much as possible, thereby reducing the stress applied to the electrode assembly 20 due to the swelling; and the buffer member 30 can absorb the swelling of the electrode assembly 20 as much as possible, thereby reducing the stress applied to the electrode assembly 20 due to the swelling.

In some examples, a compressible proportion of the buffer member 30 is 10% to 95%.

The compressible proportion of the buffer member 30 is denoted as K, where K=Q/D0, the Q herein is a compressible amount of the buffer member 30, Q=D0-D1, D1 is a thickness of the buffer member 30 after compression, D0 is a thickness of the buffer member 30 in an initial free state, and K=(D0-D1)/D0. In some examples, if the compressible proportion of the buffer member 30 is less than 10%, the compressible amount of the buffer member 30 is small, making it difficult to absorb the deformation of the electrode assembly 20. If the compressible proportion of the buffer member 30 is greater than 95%, a thicker buffer member 30 is usually required, and the buffer member 30 occupies an excessively large space, easily affecting the energy density of the battery cell 100. Therefore, the compressible proportion K of the buffer member 30 may be 10%, 95%, or any value between 10% and 95%, such as 12%, 14%, 16%, 18%, 20%, 22%, 24%, 26%, 28%, 30%, 32%, 34%, 36%, 38%, 40%, 42%, 44%, 46%, 48%, 50%, 52%, 54%, 56%, 58%, 60%, 62%, 64%, 66%, 68%, 70%, 72%, 74%, 76%, 78%, 80%, 82%, 84%, 86%, 88%, 90%, 92%, or 94%. The thickness of the buffer member 30 after compression and the thickness of the buffer member 30 in the free state can be measured using devices such as a thickness gauge or a micrometer.

In some preferred examples, the compressible proportion K of the buffer member 30 is 10% to 90%. To be specific, the compressible proportion K of the buffer member 30 may be 10%, 95%, or any value between 10% and 95%, such as 12%, 14%, 16%, 18%, 20%, 22%, 24%, 26%, 28%, 30%, 32%, 34%, 36%, 38%, 40%, 42%, 44%, 46%, 48%, 50%, 52%, 54%, 56%, 58%, 60%, 62%, 64%, 66%, 68%, 70%, 72%, 74%, 76%, 78%, 80%, 82%, 84%, 86%, 88%, 90%, 92%, or 94%. This can ensure that the buffer member 30 can buffer the swelling deformation of the electrode assembly 20, thereby reducing the stress applied to the electrode assembly 20 due to the swelling, and improving the service life and safety performance.

In this technical solution, the buffer member 30 can experience a compressive deformation with the swelling of the electrode assembly 20 to absorb the swelling of the electrode assembly 20 as much as possible.

In some examples, a swelling rate of the electrode assembly 20 is in a range of 5% to 200%.

The swelling rate k herein is (a ratio of a total thickness of the electrode assembly 20 which is fully charged to 100% SOC to a total thickness of the electrode assembly which is fully discharged to 0% SOC) -1, that is, k=W1/W2-1. In other words, there are an electrode assembly 20 with a small swelling rate of 5%, an electrode assembly 20 with a large swelling rate of 200%, and an electrode assembly 20 with a swelling rate being any value between 5% and 200%. For example, the swelling rate is 10%, 15%, 20%, 25%, 30%, 35%, 40%, 45%, 50%, 55%, 60%, 65%, 70%, 75%, 80%, 85%, 90%, 95%, 100%, 105%, 110%, 115%, 120%, 125%, 130%, 135%, 140%, 145%, 150%, 155%, 160%, 165%, 170%, 175%, 180%, 185%, 190%, or 195%. With the buffer member 30 provided, the buffer member 30 can compress to absorb the swelling amount of the electrode assembly 20, thereby reducing the stress applied to the electrode assembly 20.

The total thickness of the electrode assembly 20 which is fully charged to 100% SOC (state of charge) and the thickness of the electrode assembly 20 which is fully discharged to 0% SOC can be measured using devices such as a thickness gauge or a micrometer.

In some preferred examples, the swelling rate k of the electrode assembly 20 is in a range of 8% to 180%. To be specific, the swelling rate k may be 8%, 10%, 15%, 20%, 25%, 30%, 35%, 40%, 45%, 50%, 55%, 60%, 65%, 70%, 75%, 80%, 85%, 90%, 95%, 100%, 105%, 110%, 115%, 120%, 125%, 130%, 135%, 140%, 145%, 150%, 155%, 160%, 165%, 170%, 175%, or 180%. At these swelling rates, the buffer member 30 can experience effective compressive deformation with the electrode assembly 20, allowing the buffer member 30 to compress to absorb the swelling amount of the electrode assembly 20, thereby reducing the stress applied to the electrode assembly 20 due to the swelling.

In this technical solution, the deformation of the electrode assembly 20 with a large swelling rate can be absorbed by the buffer member 30, thereby reducing the stress applied to the electrode assembly 20 due to the swelling and prolonging the service life of the battery cell 100.

In some embodiments, a ratio of a total volume of the buffer member 30 and a total internal volume of the housing 10 is 0.05 to 0.6.

To prevent the buffer member 30 from occupying an excessively large space so as not to affect the space for the electrode assembly 20 or affect the energy density of the battery cell 100, and to ensure that the buffer member 30 can effectively absorb the swelling amount of the electrode assembly 20, the ratio of the total volume of the buffer member 300 to the total internal volume of the housing 10 can be limited. The total internal volume of the housing 10 herein refers to a total volume of an accommodating space inside the housing 10. The buffer member 30 herein refers to a total volume of all buffer members 30 disposed in the housing 10. Certainly, when one buffer member 30 is disposed in the housing 10, the total volume of the buffer member 30 is a volume of this buffer member 30.

In some specific embodiments, when the ratio of the total volume of the buffer member 30 to the total internal volume of the housing 10 is 0.05 to 0.6, the capacity retention rate of each battery cell 100 can reach 90% or above, and the weight energy density is above 150 Wh/kg. That is, the buffer member 30 has slight impact on the weight energy density of the battery cell 100. Some specific embodiments are shown in the following table.

| Example | Ratio of total volume of buffer member and total internal volume of housing | Capacity retention rate after 1000 cls at 25°C (%) | Weight energy density (Wh/kg) |
|---|---|---|---|
| Example 7 | 0.05 | 90.4% | 162.1 |
| Example 8 | 0.2 | 91.5% | 160.9 |
| Example 9 | 0.5 | 92.0% | 157.0 |
| Example 10 | 0.6 | 90.7% | 156.3 |
| Comparative example 5 | 0 | 81.2% | 162.8 |
| Comparative example 6 | 0.9 | 89.6% | 138.5 |

Therefore, the ratio of the total volume of the buffer member 30 to the total internal volume of the housing 10 is limited between 0.05 and 0.6. The volume ratio herein may be 0.05, 0.6, or any value between 0.05 and 0.6, such as 0.1, 0.15, 0.2, 0.25, 0.3, 0.35, 0.4, 0.45, 0.5, or 0.55.

This technical solution can prevent the buffer member 30 from occupying an excessively large space so as not to affect the space for the electrode assembly 20 or affect the energy density, and also prevent the buffer member 30 from occupying an excessively small space so as not to cause a failure in effectively absorbing the swelling amount of the electrode assembly 20.

In some preferred examples, the ratio of the total volume of the buffer member 30 to the total internal volume of the housing 10 is 0.08 to 0.55. The volume ratio herein may be 0.08, 0.55, or any value between 0.08 and 0.55, such as 0.1, 0.15, 0.2, 0.25, 0.3, 0.35, 0.4, 0.45, 0.5, or 0.54.

In some embodiments, an area ratio of the buffer member 30 to a largest surface of the electrode assembly 20 is in a range of 0.1 to 1.

The area of the buffer member 30 herein may be an area of a surface of the buffer member 30 corresponding to the large surface of the electrode assembly 20. The area of the buffer member 30 may be the same as that of the large surface of the electrode assembly 20, or smaller than a size of the large surface. That is, the buffer member does not need to cover the entire electrode assembly 20, as long as the buffer member has an area partially overlapping the large surface of the electrode assembly. The area ratio of the buffer member 30 to the largest surface of the electrode assembly 20 may be 0.1, 0.3, 0.5, 0.7, 0.9, or the like.

In some preferred examples, the area ratio of the buffer member 30 to the largest surface of the electrode assembly 20 is 0.2 to 0.95. To be specific, the area ratio can be 0.2, 0.95, or any value between 0.2 and 0.95, such as 0.3, 0.5, 0.7, or 0.9.

This technical solution can reduce a size of an elastic sheet while effectively absorbing the swelling, thereby reducing costs, reducing weight of the whole structure, and also reducing precision requirements in installation of the elastic sheet.

In some embodiments, a ratio of the compressible amount of the buffer member 30 to the thickness of the electrode assembly 20 in the fully discharged state of the battery cell 100 is in a range of 5% to 80%.

The compressible amount of the buffer member 30 is denoted as Q. In the fully discharged state of the battery cell 100, the thickness of the electrode assembly 20 is denoted as W2. An excessively small Q/W2 makes it difficult for the buffer member 30 to effectively absorb the swelling of the electrode assembly 20. An excessively large Q/W2 makes the buffer member 30 occupy an excessively large space, affecting the energy density of the battery cell 100. Therefore, Q/W2 is limited between 5% and 80%. Q/W2 may be 5%, 80%, or any value between 5% and 80%, such as 10%, 15%, 20%, 25%, 30%, 35%, 40%, 45%, 50%, 55%, 60%, 65%, 70%, or 75%.

In some preferred examples, the ratio Q/W2 of the compressible amount of the buffer member 30 to the thickness of the electrode assembly 20 in the fully discharged state of the battery cell 100 is 6% to 70%. To be specific, Q/W2 may be 6%, 70%, or any value between 6% and 70%, such as 10%, 15%, 20%, 25%, 30%, 35%, 40%, 45%, 50%, 55%, 60%, or 65%.

In this technical solution, the buffer member 30 can absorb the swelling of the electrode assembly 20 as much as possible, thereby reducing the stress applied to the electrode assembly 20 due to the swelling; in addition, the buffer member 30 is prevented from occupying an excessively large space, so as not to affect the energy density of the battery cell 100.

In some embodiments, the battery cell 100 is a metal battery. The metal battery has a large swelling rate. Therefore, disposing the buffer member 30 in the metal battery can effectively reduce the stress applied to the electrode assembly 20 during swelling, thereby prolonging the service life of the battery cell 100.

In some embodiments, the battery cell 100 is a sodium metal battery. The sodium metal battery has a large swelling rate. Disposing the buffer member 30 in the sodium metal battery can effectively reduce the stress applied to the electrode assembly 20 during swelling, thereby reducing a deformation amount of the housing 10 of the sodium metal battery, alleviating the problem of large swelling of the sodium metal battery during charging and discharging, and prolonging the service life of the battery cell 100.

In some embodiments, the negative electrode plate 22 of the electrode assembly 20 includes a substrate and a conductive coating applied onto a surface of the substrate.

In an example, the conductive coating may be conductive carbon.

To be specific, the negative electrode plate 22 is formed by the substrate and the conductive coating on the substrate and does not need to be provided with a negative electrode active substance layer, so during charging and discharging of the battery cell 100, the negative electrode plate 22 has a large swelling amount. Therefore, the provision of the buffer member 30 can effectively alleviate the problem of large swelling of the negative electrode plate 22 during charging and discharging of the battery, thereby prolonging the service life of the battery cell 100.

This technical solution can alleviate the problem of large swelling of the metal battery, thereby prolonging the service life of the metal battery.

A battery 2000 according to a second aspect of this application includes the battery cell 100 according to the embodiments of the first aspect of this application.

An electric apparatus according to a third aspect of this application includes the battery cell 100 according to the embodiments of the first aspect of this application, where the battery cell 100 is configured to provide electrical energy for the electric apparatus. The use of the foregoing battery cell 100 helps to improve the use safety and reliability of the electric apparatus.

The following describes a battery cell 100 according to a specific embodiment of this application with reference to the accompanying drawings.

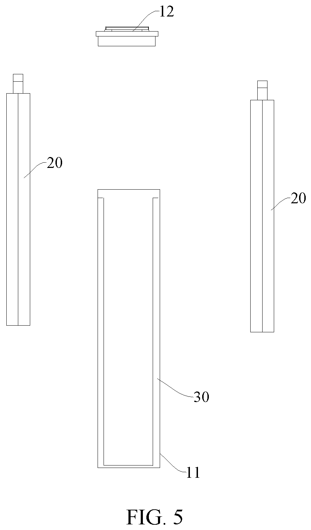

As shown in FIG. 5 to FIG. 7, the battery cell 100 includes a housing 10 and an electrode assembly 20. The housing 10 includes a shell 11 and an end cover 12. The electrode assembly 20 is disposed in the housing 10, and a buffer member 30 is disposed between the electrode assembly 20 and the shell 11. The buffer member 30 includes a part corresponding to two large side surfaces of the shell 11 and a part corresponding to a bottom surface of the shell 11. The buffer member 30 forms a U-shaped member, and the buffer member 30 fits the shell 11 through adhesion. The buffer member 30 may be a rubber member, and the buffer member 30 is coated with a heat conduction coating.

In this embodiment, the buffer member 30 is disposed between the housing 10 and the electrode assembly 20, so the buffer member 30 can experience compressive deformation with the swelling of the electrode assembly 20 during charging and discharging of the battery cell 100, increasing the space for accommodating the electrode assembly 20 in the battery cell 100, so that the stress applied to the electrode assembly 20 due to the swelling can be reduced and the possibility of deformation of the housing 10 can be reduced as well, thereby alleviating the problem of large swelling of the battery cell 100 during charging and discharging and prolonging the service life of the battery cell 100. In addition, the heat of the electrode assembly 20 can be quickly transferred to the housing 10 through the buffer member 30 and then discharged through the housing 10, thereby improving the safety performance of the battery cell 100.

The following describes a battery cell 100 according to another specific embodiment of this application with reference to the accompanying drawings.

As shown in FIG. 11 and FIG. 12, the battery cell 100 includes a housing 10 and a plurality of electrode assemblies 20. A buffer member 30 is disposed between two adjacent electrode assemblies 20. The buffer member 30 corresponds to large surfaces of the electrode assemblies 20, and an area of the buffer member 30 is the same as areas of the large surfaces of the electrode assemblies 20. The buffer member 30 may be a silicone member, and the buffer member 30 is coated with a heat insulation coating.

In this embodiment, the buffer member 30 is disposed between two adjacent electrode assemblies 20, so the buffer member 30 can experience compressive deformation with the swelling of the electrode assembly 20 during charging and discharging of the battery cell 100, increasing the space for accommodating the electrode assembly 20 in the battery cell 100, so that the stress applied to the electrode assembly 20 due to the swelling can be reduced and the possibility of deformation of the housing 10 can be reduced as well, thereby alleviating the problem of large swelling of the battery cell 100 during charging and discharging and prolonging the service life of the battery cell 100. In addition, the heat of the electrode assembly 20 is not quickly transferred to adjacent electrode assemblies 20 through the buffer member 30, avoiding rapid heat transfer between the electrode assemblies 20, thereby ensuring the safety performance of the battery cell 100.

The following describes a battery cell 100 according to another specific embodiment of this application with reference to the accompanying drawings.

As shown in FIG. 13 and FIG. 14, the battery cell 100 is a stacked battery. An electrode assembly 20 of the battery cell 100 includes a positive electrode plate 21, a negative electrode plate 22, and a separating member 23 that are stacked, where the buffer member 30 is disposed between the negative electrode plate 22 and the separating member 23.

In this embodiment, the buffer member 30 is disposed in the electrode assembly 20, so that the buffer member 30 can experience compressive deformation with the swelling of the electrode plate during charging and discharging of the battery cell 100, increasing the space for accommodating the electrode assembly 20 in the battery cell 100, so that the stress applied to the electrode assembly 20 due to swelling can be reduced and the possibility of deformation of the housing 10 can be effectively reduced as well, thereby alleviating the problem of large swelling of the battery cell 100 during charging and discharging and prolonging the service life of the battery cell 100.

In conclusion, it should be noted that the foregoing embodiments are merely for describing the technical solutions of this application rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of this application, and shall all fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A battery cell, comprising:
a housing; and
an electrode assembly, the electrode assembly being disposed in the housing;
wherein a buffer member is further disposed in the housing, and the buffer member is configured to be deformable when the electrode assembly deforms.

2. The battery cell according to claim 1, wherein the buffer member at least corresponds to a largest surface of the electrode assembly.

3. The battery cell according to claim 1 or 2, wherein the buffer member is formed in a sheet shape.

4. The battery cell according to any one of claims 1 to 3, wherein the buffer member has a weight reducing structure.

5. The battery cell according to claim 4, wherein the weight reducing structure is at least one of a groove, a hole, and a rough surface.

6. The battery cell according to claim 4 or 5, wherein the weight reducing structure is provided with a filler inside, and the filler is at least one of a reactive ion supplement, a flame retardant/safener, and a dissolved metal element complexing agent.

7. The battery cell according to any one of claims 1 to 6, wherein an outer surface of the buffer member is coated with a flame retardant; and/or the outer surface of the buffer member has a shaping material.

8. The battery cell according to any one of claims 1 to 7, wherein the buffer member comprises one or more of rubber, foam, aerogel, silicone, and other polymers.

9. The battery cell according to any one of claims 1 to 8, wherein the buffer member is disposed between the housing and the electrode assembly.

10. The battery cell according to claim 9, wherein the housing comprises a shell and an end cover, the shell is provided with an accommodating cavity with one side open, the end cover fits with the shell to close the accommodating cavity, and the buffer member is disposed between the shell and the electrode assembly.

11. The battery cell according to claim 10, wherein the buffer member corresponds to two largest side surfaces of the shell and a bottom wall of the shell.

12. The battery cell according to any one of claims 9 to 11, wherein a ratio of a compressible amount of the buffer member to a sum of a wall thickness of the housing and a thickness of the buffer member is in a range of 10% to 90%.

13. The battery cell according to any one of claims 9 to 12, wherein a heat conduction coefficient of the buffer member is greater than 0.3 W/(m•°C).

14. The battery cell according to claim 13, wherein the buffer member is coated with a heat conduction coating, or the buffer member is a member made of a heat conduction material.

15. The battery cell according to any one of claims 1 to 14, wherein the buffer member is adhered to the housing and/or the electrode assembly.

16. The battery cell according to any one of claims 1 to 15, wherein the electrode assembly is provided in plurality, and the buffer member is disposed between at least adjacent two of the electrode assemblies.

17. The battery cell according to any one of claims 1 to 16, wherein the electrode assembly comprises a plurality of electrode plates, and the buffer member is disposed between at least adjacent two of the electrode plates.

18. The battery cell according to claim 17, wherein the electrode assembly further comprises a separating member, the electrode plate comprises a positive electrode plate and a negative electrode plate, and the buffer member is disposed between the separating member and the negative electrode plate.

19. The battery cell according to any one of claims 16 to 18, wherein a heat conduction coefficient of the buffer member is not greater than 0.2 W/(m•°C).

20. The battery cell according to any one of claims 1 to 19, wherein the compressible amount of the buffer member is greater than or equal to a swelling amount of the electrode assembly.

21. The battery cell according to any one of claims 1 to 20, wherein under a predetermined pressure, the compressible amount of the buffer member is in a range of 1 mm to 100 mm; and/or
a compressible proportion of the buffer member is 10% to 95%.

22. The battery cell according to any one of claims 1 to 21, wherein the swelling amount of the electrode assembly is in a range of 0.2 mm to 80 mm; and/or
a swelling rate of the electrode assembly is in a range of 5% to 200%.

23. The battery cell according to any one of claims 1 to 22, wherein a ratio of a total volume of the buffer member and a total internal volume of the housing is 0.05 to 0.6; and/or
an area ratio of a portion of the buffer member facing the electrode assembly to the largest surface of the electrode assembly is 0.1 to 1; and/or
a ratio of the compressible amount of the buffer member to a thickness of the electrode assembly in a fully discharged state of the battery cell is 5% to 80%.

24. The battery cell according to any one of claims 1 to 23, wherein the battery cell is a metal battery.

25. The battery cell according to any one of claims 1 to 24, wherein a negative electrode plate of the electrode assembly comprises a substrate and a conductive coating applied onto a surface of the substrate.

26. The battery cell according to any one of claims 1 to 25, wherein the battery cell is a sodium metal battery.

27. A battery, comprising the battery cell according to any one of claims 1 to 26.

28. An electric apparatus, comprising the battery cell according to any one of claims 1 to 26, wherein the battery cell is configured to provide electrical energy.
